# EUROPEAN PATENT SPECIFICATION

(11) **EP 1 882 674 B1**
(45) Date of publication and mention of the grant of the patent: **19.01.2011**
(21) Application number: 06253954.9
(22) Date of filing: 28.07.2006
(51) Int. Cl.: C01B 13/11

(54) **An online ozone treatment system operated in an enclosed cabinet**
In einem geschlossenen Schrank betriebenes Online-Ozonbehandlungssystem
Système en ligne de traitement a l'ozone actionné dans une armoire enclose

(43) Date of publication of application: 30.01.2008
(73) Proprietor: Liou, Huei-Tarng, Taipei City 106 (TW)
(72) Inventor: Liou, Huei-Tarng, Taipei City 106 (TW)
(74) Representative: Oxley, Rachel Louise

(56) References cited:
- WO-A2-98/16473
- US-A- 4 954 321
- US-A1- 2004 197 244

## Description

### Field of the Invention

The invention relates to an on-line ozone treatment system comprising an enclosed cabinet suitable for operation in an adverse environment.

### Background of the Invention

Ozone is usually applied to treat the water to be used in semiconductor industries, aquatic products industries, swimming pools, households, etc. Under many circumstances, a system for treating water with ozone is placed outdoors where shelter is unavailable. In this circumstance, the ozone treatment system must be installed in an enclosed cabinet to prevent it from being exposed to the elements, for example, rain, dust, or any other particles or contaminants that will invade or be deposited on the ozone treatment system, and thus less maintenance is required and the lifespan of the system can be extended. An ozone treatment system that can be suitably operated in an enclosed cabinet is particularly useful for those users residing in remote areas where maintenance is not readily available.

However, since a relatively high voltage, normally from 6000 V to 30000 V, is required to drive an ozone generating tube, a great amount of heat accompanying the high voltage used to generate ozone is inevitably produced. It is apparent that if such a great amount of heat is produced in an enclosed cabinet, the temperature therein will rise to an extremely high degree at which the components of the ozone treatment system cannot endure. In this circumstance, the lifespan of the ozone generating apparatus will be significantly shortened or the ozone treatment system will even break down quickly.

### Summary of the Invention

The ozone treatment system disclosed in the present invention primarily comprises one or more ozone generating tubes connected in a series, a high voltage transformer to provide high voltage to drive the ozone generating tube, and an injector for mixing the ozone generated by the ozone generating tubes with the water fed from an external source. If necessary, an ozone destructor is provided to absorb the ozone that may remain in the cabinet in generally low concentrations. The water mixed with ozone is delivered to a user's end by the injector.

The object of the present invention is to provide an ozone treatment system which is suitable for operation in an adverse environment. The ozone treatment system comprises an enclosed cabinet so that the inside of the system is prevented from being exposed to the elements, such as rain, dust, or any other contaminants, which, otherwise, may be deposited on the components inside the cabinet and cause damage thereto after a long period of operation.

It is a further object of the present invention to provide an ozone treatment system incorporating a cooling system so that the temperature of the ozone treatment system during its operation can be cooled down to an operable range.

It is also an object of the present invention that the cooling system used in the ozone treatment system is cost effective without significant installation expense and electric power to maintain the operation of the cooling system.

It is a further object of the present invention that the maintenance requirements for the ozone treatment system are very low.

To achieve the above objects, the present invention discloses a cooling system that comprises a heat radiator, a heat exchanger, and an air-circulating fan, wherein the heat radiator is provided with a plurality of fins and is in full contact with the surface of the ozone generating tube, the air-circulating fan is mounted in the cabinet, and the heat exchanger is in full contact with the surface of the injector. With the arrangement of the cooling system, the heat generated by the ozone generating tube, high voltage transformer, and electronic circuit is radiated into the air circulated by the fan so that the heat is effectively transferred to the heat exchanger. The heat may further be transferred to the injector and carried away and out of the cabinet by the water flowing through the injector and out of the cabinet.

The advantage of the present invention is that only the heat radiator, heat exchanger, and an air-circulating fan are required for the cooling system. All these components used for cooling do not need electrical power except the air-circulating fans, which, however, consume only very low power. The costs for installing the cooling system and maintaining the operation thereof are insignificant as compared with the overall cost of the ozone treatment system in the cabinet. The advantage of lowering the cost and the effect of lowering the temperature make it highly applicable and useful when an ozone treatment system is to be operated inside an enclosed environment.

The characteristics of the invention will become apparent to those skilled in the art by making reference to the drawings of the present invention and the following detailed descriptions of the preferred embodiment.

### Brief Description of the Drawings

Figure 1 is a front elevated view of the ozone treatment system installed in a cabinet;
Figure 2 is the rear view of Fig. 1;
Figure 3 is the right side view of Fig. 1; and
Figure 4 is the top view of Fig. 1.

### Detailed Description of the Preferred Embodiments

The present invention provides an ozone treatment system comprising an enclosed cabinet 20, and thus is suitable to be used in an adverse environment where the ozone treatment system may be exposed to rain, dust, and other contaminant, etc.

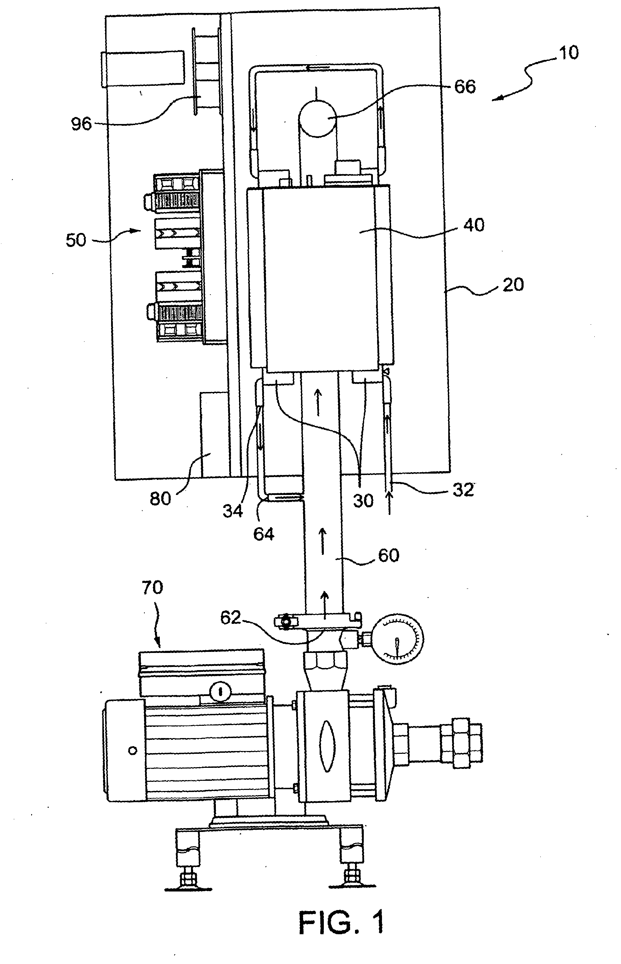

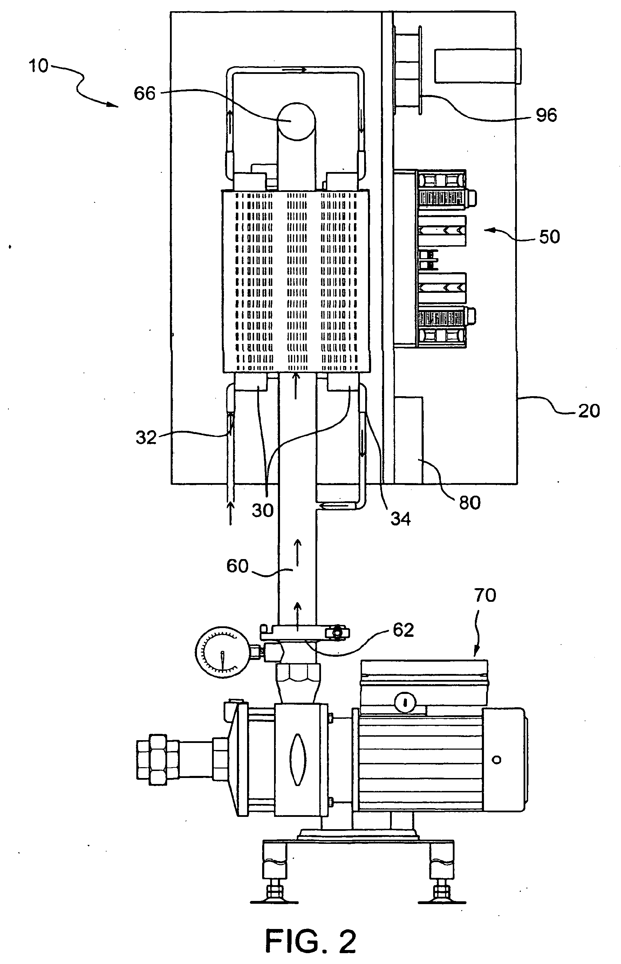

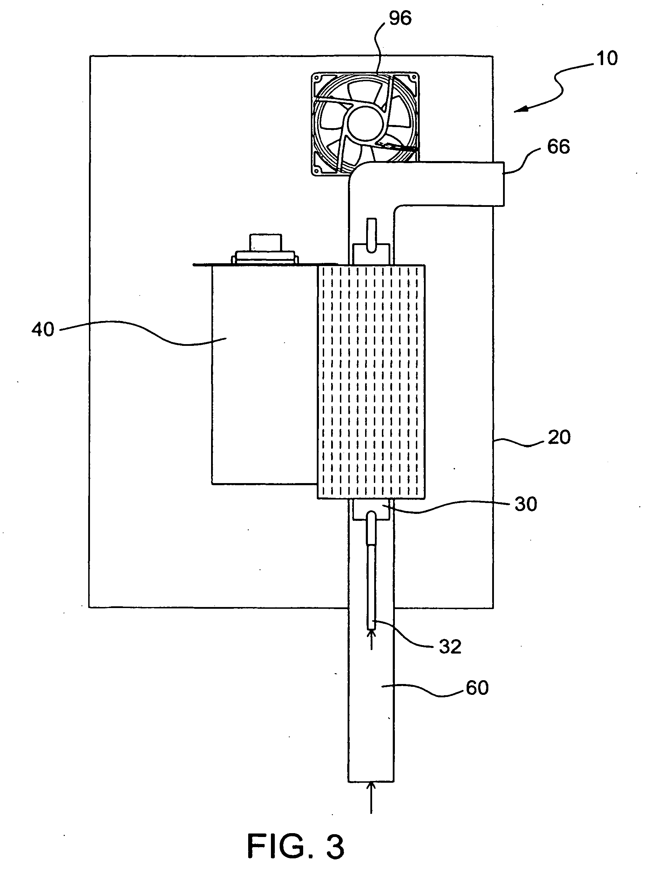

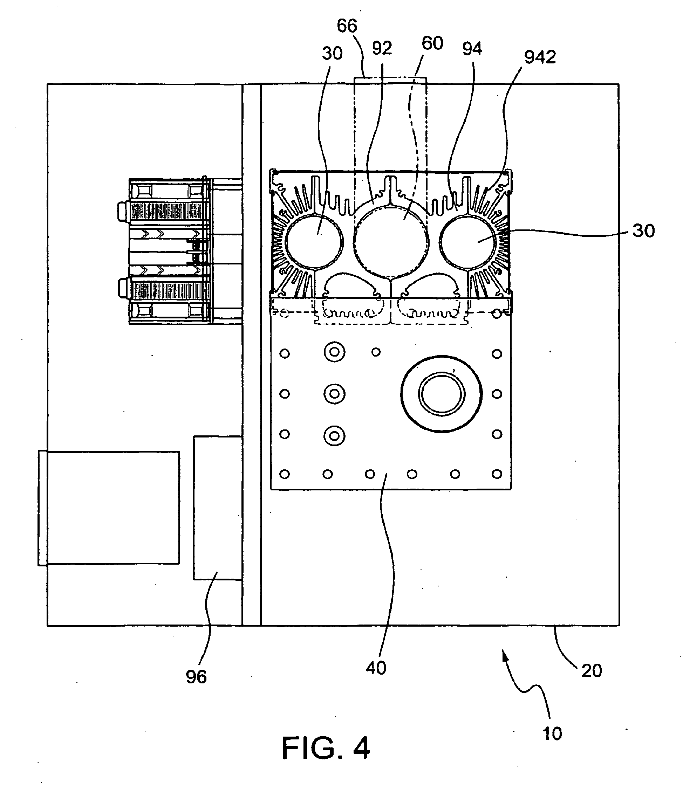

The ozone treatment system 10 according to the present invention primarily comprises a cabinet 20, a pump 70, one or more ozone generating tubes 30 connected in a series, and an injector 60. Each of the ozone generating tubes 30 has a gas input port 32 for feeding source gas (oxygen or air) and a gas output port 34 for exporting product gas (a mixture of ozone and the source gas). In the embodiment shown in Figs. 1 to 4, the ozone treatment system 10 comprises two ozone generating tubes 30 connected in series.

The ozone generating tube 30 has a gas input port 32 provided for feeding oxygen or air into the ozone generating tube 30. The ozone generating tube 30 can be a tube type or a plate type. In this embodiment, it is a tube type. The principles of how an ozone generator works are not the concern of the present invention, and thus are not discussed in the following description. However, it should be understood that typical ozone generators produce ozone from oxygen or air (which contains oxygen) by way of electrical discharge. To create electrical discharge, a supply of high voltage to the ozone generating tube is required. In the present invention, the high voltage transformer 50 is provided to supply high voltage, normally ranging from 6000 V to 30000V, to the ozone generating tube 30.

The injector 60 has a water inlet 62 and a water outlet 66. The water inlet 62 is connected to the pump 70. The pump 70 provides sufficient pumping head to deliver water to the injector 60. The injector 60 has a gas inlet 64, which is connected to the output port 34 of the ozone generating tube 30. The injector 60 possesses a negative-pressured suction structure, which employs Venturi's tube effect, so that the gas may be sucked into the injector 60 through the gas inlet 64 as the water pumped by the pump 70 flows through the interior of the injector 60. The gas (mostly ozone) sucked into the injector 60 is mixed with the water flowing through the interior of the injector 60. The ozone mixed with the water is mostly dissolved therein and flows out of the injector 60 as ozone water from the water outlet 66 and is delivered to a user's end.

However, in case any ozone is present in the cabinet 20, an ambient air ozone destructor 80, which is preferably a bag type filter filled with MnO₂, is provided with the cabinet 20. When the air circulates inside the cabinet 20 and passes through the filter, the low concentration of ozone in the air, if any, will be destructed by the MnO₂.

The high voltage transformer 50 generates a great amount of heat during operation due to its high voltage, ranging from 6000 V to 30000 V. The ozone generating tube 30 works under a high voltage of from 6000 V to 30000 V so that the electric discharge may occur in the air or oxygen, and thus generates ozone in the ozone generating tube 30. Since the ozone generating tube 30 is operated under such high voltage, it also generates a great amount of heat.

The heat generated by the transformer 50 and the ozone generating tube 30 will raise the air temperature in the cabinet 20. Since the cabinet 20 is substantially a sealed enclosure, the air temperature within the cabinet 20 will be elevated to a degree that the ozone generating tube, transformer, or the electric circuit cannot withstand if no cooling measures are provided.

The ozone treatment system 10 is provided with a cooling system, which comprises a heat exchanger 92, a heat radiator 94, and air circulating fans 96. The heat exchanger 92 is installed so that it surrounds the injector 60. The heat radiator 94 is installed in similar way so that it surrounds the ozone generating tube 30 and/or the transformer 40. The heat produced by the ozone generating tube 30, transformer 40, and electric circuit (or electric controller 50) is radiated into the air confined in the cabinet 20.

The heat radiator 94 can be provided with a plurality of fins 942. The function of the fins 942 is to increase the surface area in contact with the air, and thus enhance heat radiation and heat convection of the heat radiator 94. The air circulating fans 96 circulate the air confined in the cabinet 20, and thus enhance heat convection from the heat radiator 94 to the air. With the arrangement of the cooling system, the heat generated by the transformer, the ozone generating tube, and the electric circuit will be taken away and out of the cabinet 20 by the water flowing through the injector 60.

The heat exchanger 92 and heat radiator 94 can be made of any materials of higher heat conductivity. For this consideration, aluminum is preferred. Advantageously, the cost of aluminum is comparatively lower in price. In addition, manufacturing and machining aluminum is much easier than it is for most other materials, thus further reducing the cost compared to what it would be if other materials were used.

It should be evident that under normal and steady operating conditions of the ozone treatment system 10, wherein water flows inside the injector thus inside the heat exchanger, the temperature on the surface of the heat radiator 94 is higher than that of the air, and the temperature of the air is higher than that of the surface of the heat exchanger. Because of this phenomenon, the provision of air-circulating fans will effectively enhance heat flow from the heat radiator 94 to the heat exchanger 92 by way of circulated air.

The invention may also be implemented in other specific modes without departing from the scope of the invention as defined in the claims. Thus, the above-mentioned embodiments shall be regarded as explanatory but not restrictive. All changes in consistency with the meaning and range of the claims and the equivalents shall fall within the scope claimed by the invention.

## Claims

1. An ozone treatment system, comprising:
a cabinet forming an enclosure;
an ozone generating device installed in the cabinet, comprising:
one or more ozone generating tubes connected in series for generating ozone from the air or oxygen fed therein;
a high voltage transformer, providing a voltage which is high enough to drive the one or more ozone generating tubes;
an electronic control for controlling the one or more ozone generating tubes;
an injector having a water inlet for connecting to a pump and a gas (or ozone) inlet for connecting to the last one of the one or more ozone generating tubes such that the ozone generated by the one or more ozone generating tubes is mixed with the water fed in from the pump;
**characterized in that**
a heat exchanger is provided to be in contact with the injector; and
a heat radiator is provided to be in contact with the one or more ozone generating tubes.

2. The system of Claim 1, wherein the heat radiator is further configured to be in contact with the transformer.

3. The system of Claim 2, wherein the heat radiator is further configured to be in contact with the heat exchanger.

4. The system of Claim 3, wherein one or more air-circulating fans are provided to be mounted in the cabinet for circulating the air confined in the cabinet.

5. The system of Claim 4, wherein the heat radiator comprises a plurality of fins.

6. The system of Claim 5, wherein the heat radiator is made of aluminum.

7. The system of Claim 6, wherein the heat exchanger is made of aluminum.

8. The system of Claim 7, wherein an ozone destructor is provided to destroy the ozone remaining in the cabinet.

9. The system of Claim 8, wherein the ozone destructor is a bag type filter filled with MnO₂.

## Patentansprüche

1. Ozonbehandlungssystem, das Folgendes umfasst:
einen Schrank, der ein Gehäuse bildet;
eine Ozonerzeugungsvorrichtung, die in dem Schrank eingebaut ist und Folgendes umfasst:
eine oder mehrere Ozonerzeugungsröhren, die in Serie geschaltet sind, um Ozon aus der in diese zugeführten Luft oder dem in diese zugeführten Sauerstoff zu erzeugen;
einen Hochspannungstransformator, der eine Spannung bereitstellt, die hoch genug ist, um die eine oder die mehreren Ozonerzeugungsröhren zu betreiben;
eine elektronische Steuerung zur Steuerung der einen oder der mehreren Ozonerzeugungsröhren;
eine Einspritzvorrichtung mit einem Wassereinlass zur Verbindung mit einer Pumpe und einem Gas- (oder Ozon-) Einlass, um so mit der zumindest einen oder den mehreren Ozonerzeugungsröhren so verbunden zu werden, dass das durch die eine oder die mehreren Ozonerzeugungsröhren erzeugte Ozon mit durch die Pumpe zugeführtem Wasser vermischt wird;
**dadurch gekennzeichnet, dass**
ein Wärmetauscher so bereitgestellt ist, dass er mit der Einspritzvorrichtung in Kontakt steht und
ein Wärmestrahler so bereitgestellt ist, dass er mit der einen oder den mehreren Ozonerzeugungsröhren in Kontakt steht.

2. System nach Anspruch 1, worin der Wärmestrahler ferner angeordnet ist, um mit dem Transformator in Kontakt zu stehen.

3. System nach Anspruch 2, worin der Wärmestrahler ferner angeordnet ist, um mit dem Wärmetauscher in Kontakt zu stehen.

4. System nach Anspruch 3, worin ein oder mehrere Luftzirkulationslüfter bereitgestellt sind, um in dem Schrank angebracht zu werden, um die in dem Schrank eingeschlossene Luft zirkulieren zu lassen.

5. System nach Anspruch 4, worin der Wärmestrahler eine Vielzahl an Rippen umfasst.

6. System nach Anspruch 5, worin der Wärmestrahler aus Aluminium besteht.

7. System nach Anspruch 6, worin der Wärmetauscher aus Aluminium besteht.

8. System nach Anspruch 7, worin eine Ozonvernichtungsvorrichtung bereitgestellt ist, um das in dem Schrank verbleibende Ozon zu vernichten.

9. System nach Anspruch 8, worin die Ozonvernichtungsvorrichtung ein mit MnO₂ gefüllter Filter vom Beuteltyp ist.

## Revendications

1. Système de traitement à l'ozone, comprenant:
une armoire formant une enceinte;
un dispositif générateur d'ozone installé dans l'armoire, comprenant:
un ou plusieurs tubes de génération d'ozone montés en série pour produire de l'ozone à partir de l'air ou de l'oxygène introduit dans ceux-ci;
un transformateur haute tension, fournissant une tension qui est suffisamment élevée pour entraîner un ou plusieurs tubes de génération d'ozone précités;
un dispositif de commande électronique pour commander un ou plusieurs tubes de génération d'ozone précités;
un injecteur ayant une entrée d'eau pour la connection à une pompe et une entrée de gaz (ou ozone) pour la connection à au moins un parmi un ou plusieurs tubes de génération d'ozone de telle sorte que l'ozone produit par un ou plusieurs tubes de génération d'ozone précités est mélangée avec l'eau introduite par la pompe;
**caractérisé en ce que**
un échangeur de chaleur est prévu pour être en contact avec l'injecteur; et
un radiateur de chaleur est prévu pour être en contact avec un ou plusieurs tubes de génération d'ozone précités.

2. Système selon la revendication 1, dans lequel le radiateur de chaleur est en outre configuré pour être en contact avec le transformateur.

3. Système selon la revendication 2, dans lequel le radiateur de chaleur est en outre configuré pour être en contact avec l'échangeur de chaleur.

4. Système selon la revendication 3, dans lequel un ou plusieurs ventilateurs de circulation d'air sont destinés à être installés dans l'armoire pour faire circuler l'air confiné dans l'armoire.

5. Système selon la revendication 4, dans lequel le radiateur de chaleur comprend une pluralité d'ailettes.

6. Système selon la revendication 5, dans lequel le radiateur de chaleur est réalisé en aluminium.

7. Système selon la revendication 6, dans lequel l'échangeur de chaleur est réalisé en aluminium.

8. Système selon la revendication 7, dans lequel un destructeur d'ozone est prévu pour détruire l'ozone subsistant dans l'armoire.

9. Système selon la revendication 8, dans lequel le destructeur d'ozone est un filtre d'un type de sac rempli de MnO₂.
